# EUROPÄISCHE PATENTSCHRIFT

(11) **EP 2 286 502 B1**
(45) Veröffentlichungstag und Bekanntmachung des Hinweises auf die Patenterteilung: **11.07.2018**
(21) Anmeldenummer: 09765479.2
(22) Anmeldetag: 12.05.2009
(51) Int. Cl.: F16H 57/04, H02K 7/08, F16H 25/20, B23Q 11/12, B23Q 5/40, H02K 7/06, H02K 9/19

(54) **SPINDELMOTOR**
SPINDLE MOTOR
MOTEUR À BROCHE

(30) Priorität: 26.05.2008 DE 102008025072
(43) Veröffentlichungstag der Anmeldung: 23.02.2011
(60) Teilanmeldung: 11001709.2
(73) Patentinhaber: SEW-EURODRIVE GmbH & Co. KG, 76646 Bruchsal (DE)
(72) Erfinder: DITTES, Gerhard, 75053 Gondelsheim (DE); BECKER, Jürgen, 68789 St. Leon-Rot (DE); GABRIEL, Markus, 76646 Bruchsal (DE)
(86) Internationale Anmeldenummer: PCT/EP2009/003336
(87) Internationale Veröffentlichungsnummer: WO 2009/152899

(56) Entgegenhaltungen:
- DE-A1- 19 532 976
- DE-A1-102007 014 714
- US-A1- 2005 134 125

## Beschreibung

Die Erfindung betrifft einen Spindelmotor.

Aus der DE 10 2007 014 714 A1 ist ein Spindelmotor bekannt, wobei die Spindelmutter mit Kolbenstange axial geführt ist in einem Gehäuseteil.

Aus der DE 195 32 976 A1 ist ein Antrieb von Motorspindeln für Werkzeugmaschinen bekannt.

Aus der DE 102 35 078 A1 ist ein Spindelmotor bekannt, der nur ein begrenztes Fettvolumen aufweist und somit eine geringe Standzeit.

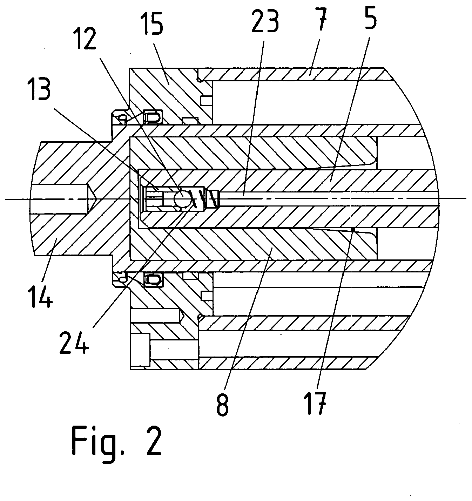

Aus der DE 10 2007 014 714 ist ein Spindelmotor bekannt, der eine Schmierstoffzuführung 21 in der dortigen Figur 2 aufweist. Er muss zeitweise nachgeschmiert werden.

Aus dem Katalog der Firma Dichtomatik sind Hochdruckdichtungen aus dem Fachgebiet der Hydraulik bekannt, wie beispielsweise eine PTFE-Nutringdichtung mit einer V-Feder aus Stahl, dort mit MA47 bezeichnet. Außerdem ist eine weitere Hochdruckdichtung bekannt, wie das Produkt WCP21, welche eine Radial-Wellendichtung mit einer PTFE-Dichtlippe und einer Elastomervorspannscheibe darstellt, die zwischen zwei Metallkäfigen geklemmt sind.

Der Erfindung liegt die Aufgabe zugrunde, bei einem Spindelmotor die Standzeit zu verlängern.

Erfindungsgemäß wird die Aufgabe bei dem Spindelmotor nach den in Anspruch 1 angegebenen Merkmalen gelöst.

Wichtige Merkmale der Erfindung bei dem Spindelmotor sind, dass er einen Elektromotor mit einem Rotor umfasst, der mit einer Gewindespindel verbunden ist, deren Gewinde mit einem Gewinde einer mit einer Kolbenstange verbundenen Spindelmutter im Eingriff steht,
wobei die Spindelmutter mit Kolbenstange axial geführt ist in einem ersten Gehäuseteil,
wobei zur axialen Führung ein Führungsteil mit der Spindelmutter und der Kolbenstange verbunden ist,
wobei die Gewindespindel in einem zweiten, mit dem ersten Gehäuseteil verbundenen Gehäuseteil über Lager gelagert ist,
wobei das zweite Gehäuseteil axial zwischen Elektromotor und dem der Spindelmutter, also dem ersten Gehäuseteil, angeordnet ist,
dadurch gekennzeichnet, dass
im zweiten Gehäuseteil ein in Umfangsrichtung verlaufender Kühlkanal ausgebildet ist,
wobei im zweiten Gehäuseteil eine Eintritts- und eine Austrittsöffnung zum Kühlkanal vorgesehen ist,
wobei die Eintritts- und Austrittsöffnung aus ungefähr radialer Richtung in den Kühlkanal führen,
wobei der Kühlkanal in Umfangsrichtung mäanderförmig verläuft.

Von Vorteil ist dabei, dass die Entwärmung zwischen den beiden wärmeerzeugenden Teilen angeordnet ist, also zwischen dem Elektromotor und dem Spindeltrieb. Somit ist nur ein Mittel zur Entwärmung notwendig und es werden Aufwand und Teile eingespart. Außerdem ist ein Baukasten von Spindelantrieben herstellbar, wobei an den gleichen Elektromotor verschiedene Spindeltriebe, insbesondere verschieden lange Spindeltriebe, verbindbar sind. Umgekehrt sind auch verschiedene Elektromotoren mit einem gleichartigen Spindeltrieb verbindbar. Auch hierbei ist also dieselbe Entwärmung anbringbar und somit eine große Variantenvielfalt erzeugbar unter Verwendung nur weniger Teile. Durch die Integration des Kühlkanals ist die Entwärmung ohne weitere zusätzliche Teile vorsehbar. Bei einem beispielhaften Spindelmotor ist nicht zur Erfindung gehörig das Gehäuseteil axial zwischen Elektromotor und dem der Spindelmutter angeordnet. Von Vorteil ist dabei, dass die Entwärmungsmittel beide Raumbereiche des Spindelantriebes entwärmen und somit je nach Betriebsart der Wärmestrom fließt. Bei einem beispielhaften Spindelmotor ist nicht zur Erfindung gehörig im Gehäuseteil eine Eintritts- und eine Austrittsöffnung zum Kühlkanal vorgesehen. Von Vorteil ist dabei, dass eine integrierte Ausführung ermöglicht ist und somit zusätzliche Teile einsparbar sind. Es genügt also, zwischen Ein- und Austrittsöffnung einen Trennsteg vorzusehen und den Kühlkanal umlaufend, also in Umfangsrichtung auszuführen. Die Ein- und Austrittsöffnungen sind in einfacher Weise als Bohrungen ausführbar.

Bei einem beispielhaften Spindelmotor ist nicht zur Erfindung gehörig der Kühlkanal zum Elektromotor hin axial begrenzt mittels eines Deckels. Von Vorteil ist dabei, dass der Kühlkanal einfach ausführbar ist, indem eine entsprechende Vertiefung im Gehäuseteil vorgesehen wird und mit dem Deckel abgedeckt wird.

Bei einem beispielhaften Spindelmotor ist nicht zur Erfindung gehörig zwischen Gehäuseteil und Deckel eine Dichtung vorgesehen. Von Vorteil ist dabei, dass der Austritt eines Kühlmediums in den Spindelantrieb oder die Umgebung verhinderbar ist.

Bei einem beispielhaften Spindelmotor ist nicht zur Erfindung gehörig der Deckel mit dem Gehäuse des Elektromotors wärmeleitend verbunden. Von Vorteil ist dabei, dass trotz der Dichtung, die den Wärmeübergangswiderstand zwischen Deckel und Gehäuseteil vergrößert, eine Entwärmung ermöglicht ist.

Bei einem beispielhaften Spindelmotor ist nicht zur Erfindung gehörig der Deckel an das Gehäuseteil angeschraubt, wobei die Schrauben auf einem Lochkreis mit einem ersten oder auf einem Lochkreis mit einem zweiten Durchmesser angeordnet sind. Insbesondere umfasst die Dichtung einen inneren und einen äußeren Ring, die über Stege verbunden sind. Von Vorteil ist dabei, dass die Dichtung durch Schrauben auf den beiden Lochkreisen funktional durch den inneren und den äußeren Ring bewirkbar ist. Somit ist ein Zwischenraum ohne Funktion und daher frei haltbar. Der frei gehaltene Raumbereich ist für die Wärmedurchleitung verwendbar. Auf diese Weise ist der Wärmestrom vom Motor zum Kühlkanal nur wenig vermindert und eine effektive Entwärmung erreichbar.

Bei einem beispielhaften Spindelmotor verlaufen nicht zur Erfindung gehörig die Stege radial und sind im Bereich einer Ausnehmung für eine jeweilige Schraube angeordnet. Von Vorteil ist dabei, dass die Stabilität der Dichtung verbessert ist.

Bei einem beispielhaften Spindelmotor ist nicht zur Erfindung gehörig in Umfangsrichtung zwischen den Stegen der Dichtung kein Material der Dichtung vorhanden, wenn der Durchmesserwert in einem Bereich zwischen dem ersten und zweiten Durchmesser liegt. Von Vorteil ist dabei, dass in diesem Zwischenbereich keine Wärmesperre für den vom Motor stammenden Wärmestrom vorhanden ist und somit ein großer Wärmestrom mittels des Kühlkanals abführbar ist.

Bei einem beispielhaften Spindelmotor ist nicht zur Erfindung gehörig eine Ölbad-Schmierung vorgesehen. Von Vorteil ist dabei, dass ein ständiger Betrieb ohne Unterbrechung für Fettschmierungen und dergleichen ermöglicht ist. Außerdem ist eine besonders kompakte Bauart ermöglicht und geringe Reibungsverluste sind vorsehbar. Insbesondere ist eine Lebensdauerschmierung ermöglicht. Auch die Wärmeabfuhr ist verbessert, da die im Innern erzeugte Wärme besser aufgespreizt ist und somit die gesamte Oberfläche zur Wärmeabfuhr lokalbegrenzter Reibungsquellen und somit Wärmequellen nutzbar ist.

Bei einem beispielhaften Spindelmotor ist nicht zur Erfindung gehörig im Inneren des Spindelmotors, insbesondere im Spindelbereich abtriebsseitig vom Elektromotor, das Ölbad vorgesehen. Insbesondere ist eine Dichtung zwischen dem Raumbereich des Elektromotors und dem Raumbereich, in welchem die Spindelmutter angeordnet ist, vorgesehen. Insbesondere ist zumindest eine Hochdruckdichtung zum Abdichten verwendet, insbesondere zwischen Spindelbereich und Elektromotor und/oder zwischen Spindelbereich und Umgebung. Von Vorteil ist dabei, dass im Elektromotor keine Ölbenetzung auftritt und seine Funktionsweise ungestört bleibt.

Bei einem beispielhaften Spindelmotor ist nicht zur Erfindung gehörig die Dichtung axial zwischen einem Lager der Gewindespindel und einer die Rotorwelle und die Gewindespindel verbindenden Kupplung angeordnet. Von Vorteil ist dabei, dass das Lager und die Dichtung vom Öl schmierbar sind.

Bei einem beispielhaften Spindelmotor ist nicht zur Erfindung gehörig die Kupplung eine axial steckbare Kupplung. Von Vorteil ist dabei, dass das Lösen und Wiederverbinden des Motors einfach und ohne Aufwand ermöglicht ist. Außerdem treten beim Wechseln des Elektromotors keine Ölverluste und Ölverschmutzungen auf.

Bei einem beispielhaften Spindelmotor ist nicht zur Erfindung gehörig die Dichtung als Wellendichtring ausgeführt, der in einem Gehäuseteil seinen Sitz hat, welches auch einen Sitz zur Aufnahme des Lagers der Gewindespindel aufweist,
wobei die Lauffläche des Wellendichtrings an der Gewindespindel vorgesehen ist. Von Vorteil ist dabei, dass eine kompakte Bauart erreichbar ist und das Gehäuseteil nur mit den zwei Sitzen zu bearbeiten ist. Außerdem gelangt Öl, das in den Bereich des Wellendichtrings gefördert wird einfach und leicht zum Lager.

Bei einem beispielhaften Spindelmotor weist nicht zur Erfindung gehörig die Gewindespindel eine Schulter zur Aufnahme von Axialkräften auf. Von Vorteil ist dabei, dass der Elektromotor vor Axialkräften geschützt bleibt. Außerdem ist somit die axial steckbare Kupplung zum Verbinden verwendbar, da bei Normalbetrieb die Kupplung geschützt ist vor Axialkräften. Wenn nun Motor und Spindel getrennt werden sollen, wird Axialkraft beim Abheben des Motors aufgebracht und somit die Kupplung getrennt.

Insbesondere ist die Schulter am Innenring des für die Gewindespindel vorgesehenen Lagers abgestützt. Von Vorteil ist dabei, dass die Trennung des Motors über die steckbare Kupplung ermöglicht ist.

Bei einem beispielhaften Spindelmotor ist nicht zur Erfindung gehörig die Kolbenstange abtriebsseitig von einer schmierstoffbetriebenen Dichtungsanordnung abgedichtet zum abtriebsseitigen Gehäuseteil hin. Von Vorteil ist dabei, dass einfache und kostengünstige Dichtungen im Gegensatz zu trockenbetriebenen Dichtungen verwendbar sind.

Bei einem beispielhaften Spindelmotor umfasst nicht zur Erfindung gehörig die Dichtungsanordnung zumindest einen Abstreifer, einen O-Ring und/oder eine Nutdichtung. Von Vorteil ist dabei, dass schmierstoffbetriebene, insbesondere ölbetriebene Dichtelemente einsetzbar sind, die auch bei einem Überdruck von 2 bar oder mehr Dichtheit gewährleisten.

Bei einem beispielhaften Spindelmotor ist nicht zur Erfindung gehörig in der Kolbenstange eine Abstützung verbunden, insbesondere eingepresst. Von Vorteil ist dabei, dass die Gewindespindel abstützbar ist und somit mit sehr großer axialer Länge ausführbar ist.

Bei einem beispielhaften Spindelmotor ist nicht zur Erfindung gehörig die Abstützung als im Wesentlichen zylindrische Ausnehmung ausgeführt, wobei an ihrem offenen Endbereich eine Einführschräge für die Einfädelung der Gewindespindel vorgesehen ist. Von Vorteil ist dabei, dass geringe Reibung auftritt, insbesondere bei Verwendung von PTFE-Material, insbesondere also Teflon, für die Abstützung. Dabei ist die Gewindespindel aus Metall, insbesondere Stahl.

Bei einem beispielhaften Spindelmotor umfasst nicht zur Erfindung gehörig die Gewindespindel zumindest einen Schmierstoffkanal, insbesondere einen aus mindestens einer Schmierstoffbohrung zusammengesetzten. Von Vorteil ist dabei, dass Öl durchleitbar ist durch die Gewindespindel hindurch und an einem Ort ausleitbar ist, an welchem zu schmierende Elemente angeordnet sind.

Bei einem beispielhaften Spindelmotor umfasst nicht zur Erfindung gehörig die Gewindespindel an ihrem vom Motor abgewandten Ende ein Ventil, das mit dem Schmierstoffkanal verbunden ist. Von Vorteil ist dabei, dass mittels des Ventils schwankende Drucke ausnutzbar sind und in eine Pumpwirkung verwandelbar ist. Denn bei Überdruck über einem kritischen Wert an Druck öffnet das Ventil, bei unteren Druckwerten bleibt es geschlossen.

Bei einem beispielhaften Spindelmotor ist nicht zur Erfindung gehörig das Ventil zwischen einer Einlassöffnung und dem Schmierstoffkanal insbesondere innerhalb der Gewindespindel. Von Vorteil ist dabei, dass mittels der erwähnten Pumpwirkung Öl durch den Schmierstoffkanal beförderbar ist und somit eine Schmierung von zu schmierenden Elementen ausführbar ist.

Bei einem beispielhaften Spindelmotor umfasst nicht zur Erfindung gehörig das Ventil zumindest eine von einer Feder gegen eine Öffnung gedrückte Kugel. Von Vorteil ist dabei, dass das Ventil mit einfachen und kostengünstigen Mitteln herstellbar ist.

Bei einem beispielhaften Spindelmotor mündet nicht zur Erfindung gehörig der Schmierstoffkanal zumindest mit seinem zweiten Ende derart im Bereich der Dichtung, dass Schmierstoff der Dichtung zugeführt wird. Von Vorteil ist dabei, dass die Dichtung als Wellendichtring ausführbar ist und der mittels des Schmierstoffkanals herangeführte Schmierstoff die Dichtheit gewährleistet.

Bei einem beispielhaften Spindelmotor mündet nicht zur Erfindung gehörig der Schmierstoffkanal zumindest mit seinem zweiten Ende zwischen der Dichtung und dem Lager. Von Vorteil ist dabei, dass Schmierstoff der Dichtung und dem Lager zugeführt wird.

Bei einem beispielhaften Spindelmotor ist nicht zur Erfindung gehörig die Gewindespindel mit dem Rotor gelagert in einem Gehäuseteil des Elektromotors. Von Vorteil ist dabei, dass Lager einsparbar sind.. Bei einem beispielhaften Spindelmotor ist nicht zur Erfindung gehörig zur axialen Führung ein Führungsteil mit der Spindelmutter und der Kolbenstange verbunden. Von Vorteil ist dabei, dass das Führungsteil die Funktion der Verbindung von Spindelmutter und Kolbenstange übernimmt sowie die Funktion der Führung in axialer Richtung.

Bei einem beispielhaften Spindelmotor ist nicht zur Erfindung gehörig das Führungsteil im Gehäuseteil axial geführt über Nutensteine, insbesondere Nutensteine, welche in einer Nut des Gehäuseteils axial bewegbar angeordnet sind. Von Vorteil ist dabei, dass kostengünstige einfache Elemente verwendbar sind.

Bei einem beispielhaften Spindelmotor ist nicht zur Erfindung gehörig der Rotor mit der Gewindespindel spielfrei verbunden, insbesondere mittels einer Schraubverbindung zusammen mit einer Klemmverbindung. Von Vorteil ist dabei, dass die axialen Positionen mit hoher Genauigkeit anfahrbar sind und dabei eine hohe Wiederholgenauigkeit erreichbar ist. Bei einem beispielhaften Spindelmotor ist nicht zur Erfindung gehörig die Kolbenstange mittels einer Dichtung, insbesondere Stangendichtung, insbesondere Abstreifer, gegen ein Gehäuseteil abgedichtet ist. Von Vorteil ist dabei, dass das Innere des Spindelmotors schützbar ist, insbesondere also auch die Gewindebereiche der Gewindespindel und der Spindelmutter.

Bei einem beispielhaften Spindelmotor ist nicht zur Erfindung gehörig im Bereich der axialen Endpositionen, also Anschläge, des Führungsteils jeweils ein elastisches Element, insbesondere O-Ring, angeordnet zur Aufnahme kinetischer Energie beim Auftreffen auf die Endposition. Von Vorteil ist dabei, dass auch im Sicherheitsfall Zerstörungen vermieden werden,

Bei einem beispielhaften Spindelmotor ist nicht zur Erfindung gehörig das Führungsteil mit der Kolbenstange mittels Klemmverbindung verbunden. Von Vorteil ist dabei, dass eine spielfreie Verbindung ausgeführt ist.

Bei einer vorteilhaften Ausgestaltung umfasst die Klemmverbindung Spannmittel, mit welchen das Führungsteil derart verformbar ist, dass die Kolbenstange einklemmbar ist. Insbesondere sind die Spannmittel tangential ausgerichtet vorgesehen, insbesondere zum Verdrehsichem der Kolbenstange gegen das Führungsteil. Von Vorteil ist dabei, dass einfache und kostengünstige Elemente verwendbar sind.

Bei einer vorteilhaften Ausgestaltung sind drei Nutensteine am Umfang angeordnet. Von Vorteil ist dabei, dass nur eine geringe Anzahl von Nutensteinen notwendig ist.

Bei einer vorteilhaften Ausgestaltung ist ein Stellring vorgesehen, wobei mittels Schraubelementen ein Verspannen des Innenrings eines Lagers des Motors ausführbar ist. Darüber hinaus ist mittels weiterer Schraubelemente ein Erzeugen von Andruckkraft für die Klemmverbindung zwischen Gewindespindel und Rotor ausführbar. Von Vorteil ist dabei, dass in einfacher Weise eine spielfreie Verbindung erzeugbar ist.

Bei einer vorteilhaften Ausgestaltung weist der Rotor in einem axialen Endbereich einen oder mehrere Axialschlitze auf. Von Vorteil ist dabei, dass nur geringe Andruckkräfte zum Verspannen notwendig sind.

Bei einem beispielhaften Spindelmotor wird nicht zur Erfindung gehörig eine formschlüssige Verbindung zwischen Führungsteil und Kolbenstange mittels Spannmitteln vorgesehen. Als Spannmittel sind Spannstifte, also Spannhülsen, verwendbar, die in zylindrische Bohrungen eingesteckt sind. Für diese formschlüssige Verbindung ist an der Kolbenstange eine derartige Abflachung vorgesehen, dass die Spannstifte berührend umgeben sind und sich an diese Abflachungsoberfläche anschmiegen infolge ihrer durch elastische Verformung bedingten Anpresskraft. Dazu ist die Abflachung als Teil einer Oberfläche eines gedachten Zylinders ausgeführt. Von Vorteil ist dabei, dass nur geringe Andruckkräfte zum Verspannen notwendig sind.

Bei einer vorteilhaften Ausgestaltung weist die Gewindespindel an ihrem einen Endbereich einen Zapfen zum Zentrieren auf. Von Vorteil ist dabei, dass einfache und kostengünstige Zentriermittel vorgesehen sind und kein zusätzlicher Bauraum hierfür notwendig ist.

Bei einer vorteilhaften Ausgestaltung ist das Zentrierteil zum Zentrieren des Gehäuseteils am Motorflansch vorgesehen. Insbesondere ist das Zentrierteil zur Aufnahme eines elastischen Elements vorgesehen. Von Vorteil ist dabei, dass ein elastischer Anschlag für das Führungselement vorsehbar ist.

Bei einer vorteilhaften Ausgestaltung ist die Kolbenstange an ihrer zur Umgebung hin vorgesehenen Oberfläche glatt ausgeführt. Von Vorteil ist dabei, dass keine Verschmutzungen ins Innere des Spindelmotors vordringen können, weil eine Abdichtung zum Gehäuseteil in einfacher und wirkungsvoller Weise ausführbar ist.

Bei einer vorteilhaften Ausgestaltung umfasst der Rotor Permanentmagnete, insbesondere der Spindelmotor nach dem Synchronmotor-Prinzip angetrieben ist. Von Vorteil ist dabei, dass hohe Kräfte erzeugbar sind. Weitere Vorteile ergeben sich aus den Unteransprüchen, Die Erfindung wird nun anhand von Abbildungen näher erläutert:

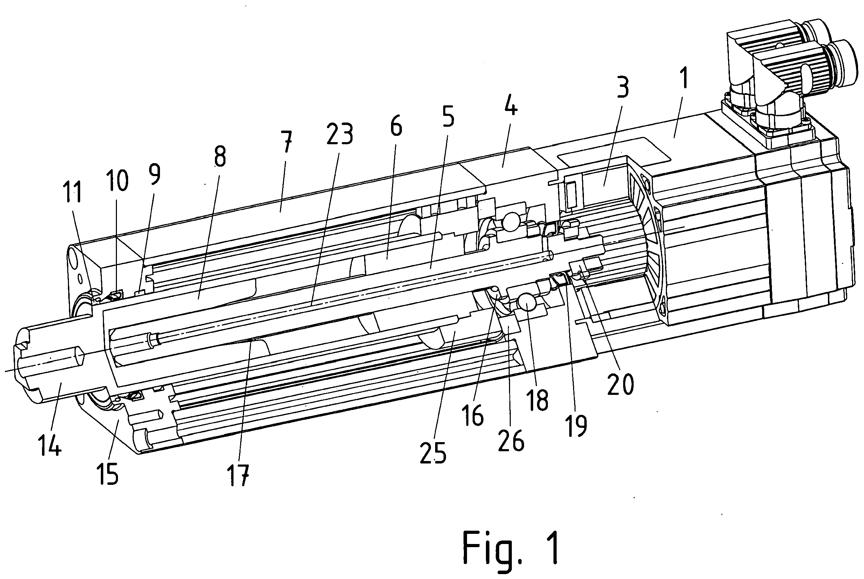

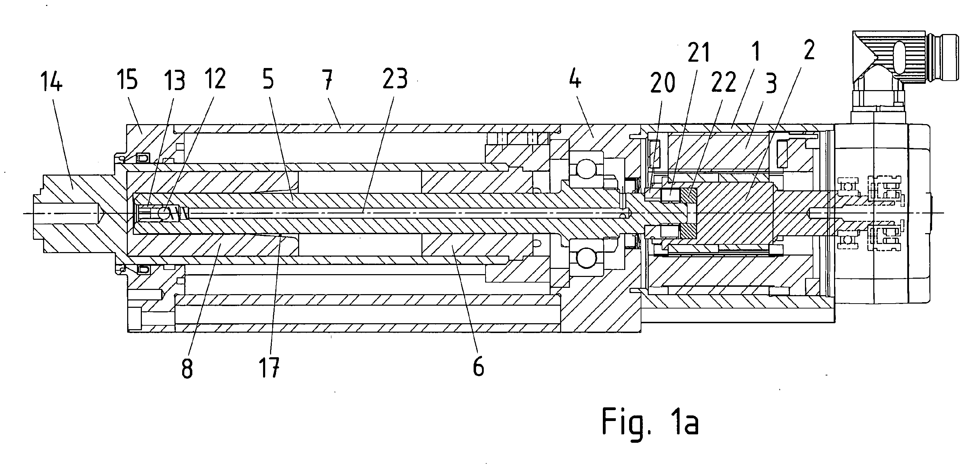

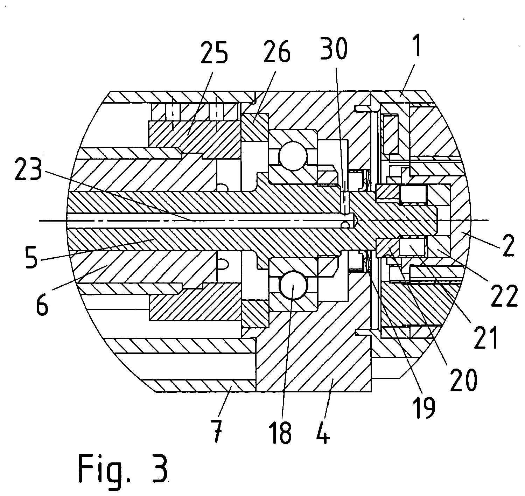

In der Figur 1 ist ein erfindungsgemäßer Spindelmotor in angeschnittener Schrägansicht und in Figur 1a in Schnittansicht gezeichnet. In Figur 2 und 3 sind jeweilige Ausschnitte hiervon vergrößert dargestellt.

Das Motorgehäuse 1 des Elektromotors, umfassend Rotorwelle 2 und Stator 3, ist mit den Gehäuseteilen 4, 7 und 15 des Spindelmotors dicht verbunden. Vorzugsweise ist an jeder Verbindungsschnittstelle der Gehäuseteile ein O-Ring miteingebracht, um Dichtheit auch gegen Überdruck, von mehr als beispielsweise 2 bar zu gewährleisten.

Das Gehäuseteil 4 nimmt das Lager 18 auf, über welches die Gewindespindel 5 gelagert ist. Diese ist über eine axial steckbare Kupplung mit der Rotorwelle 2 verbunden. Die Kupplung weist ein Klauenteil 20 und ein Klauenteil 22 auf, zwischen denen ein Kunststoffstern 21 angeordnet ist. Vorzugsweise ist diese Wellenkupplung spielfrei.

Eine im Gehäuseteil 4 angeordneter Dichtung 19 dichtet den Spindelinnenraum gegen den Motor hin ab.

Somit ist der Innenraum mit Öl befüllbar. Abtriebsseitig ist die Kolbenstange 14 mittels Führungsring 9, Dichtring 10 und Abstreifer 11 abgedichtet gegen die Umgebung.

Die Dichtungen sind dabei derart gewählt, dass sie gegen Überdrucke von mehr als 2 bar Dichtheit gewährleisten.

Die Gewindespindel weist eine Schulter 16 auf, die Axialkräfte ableitet an das Lager 18.

Bei Drehen der Gewindespindel 5 wird die Spindelmutter 6 axial bewegt, weil sie über Führungsteile (25, 26), die mit Linearführvorrichtungen verbunden sind, linear geführt ist.

Zur Abstützung bei besonders langer Ausführung der Gewindespindel 5 ist eine Abstützung 8 aus Teflon vorgesehen, die eine zylindrische Bohrung aufweist zur Aufnahme der Gewindespindel 5 und an ihrem offenen Ende eine Aufweitung aufweist, die in den Figuren 1 und 2 als Einführschräge 17 erkennbar ist.

Die Abstützung 8 ist pressverbunden in der Kolbenstange 14 und verliert den Kontakt zur Gewindespindel 5, wenn die Kolbenstange weit heraus gefahren wird. In diesem Fall ist jedoch auch die Spindelmutter weit verfahren und übernimmt die abstützende Funktion.

Beim Zurückfahren wird dann die Gewindespindel in die Einführschräge sozusagen eingefädelt.

Um die Gewindespindel 5 herum ist Schmierstoff vorgesehen, insbesondere Öl.

Dieses fließt insbesondere bei einer Einbaulage, in welcher die Kolbenstange 14 nach unten zeigt, zum entsprechenden axialen Endbereich. Wird nun der Spindelmotor hin und her gefahren, wird ein Ventil durch auftretenden lokalen Überdruck aktiviert. Hierzu wird die Kugel 12 von der Hülse 13 abgehoben und das Öl fließt durch die Hülse 13 an der Kugel 12 vorbei in die Schmierstoffbohrung 23 und wird bis zur Radialbohrung 30 befördert, wo es dann austritt im Bereich des Lagers 18 und der Dichtung 19.

Somit ist eine Schmierung in jeder Einbaulage gewährleistet.

Die geschilderte Ölpumpe ist wirksam, wenn die Kolbenstange nach unten also in Gravitationsrichtung weist. Wenn sie jedoch nach oben weist, fließt das Öl selbsttätig zum Lager 18 und der Dichtung 19.

Die Kugel 12 wird bei Abbau des lokalen Überdrucks durch ein Federelement 24 in ihre Ausgangslage versetzt.

Das Ölbad verbessert die Wärmeabfuhr, da die Wärme besser aufgespreizt wird und somit die Gehäuseteile gleichmäßiger erwärmt sind vom Inneren her des Spindelmotorbereichs.

Als Dichtung ist vorzugsweise eine Hochdruckdichtung verwendet, wie beispielsweise eine WCP21 oder MA47.

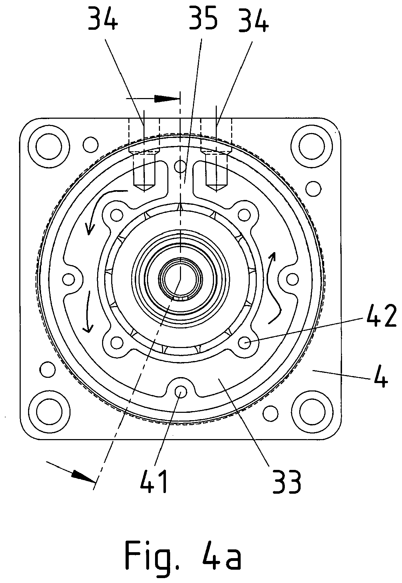

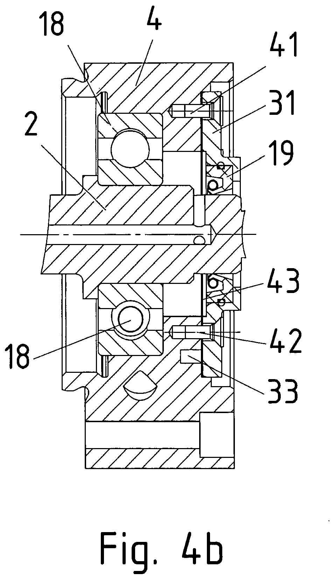

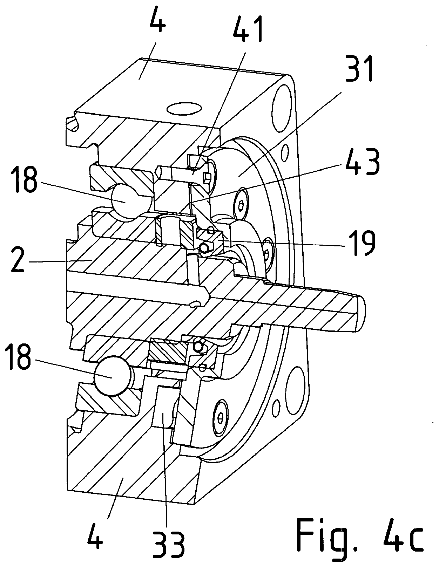

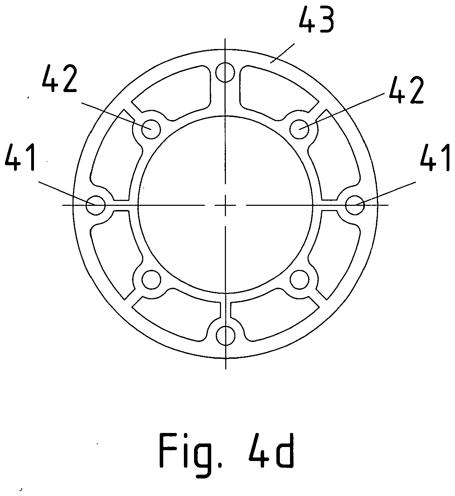

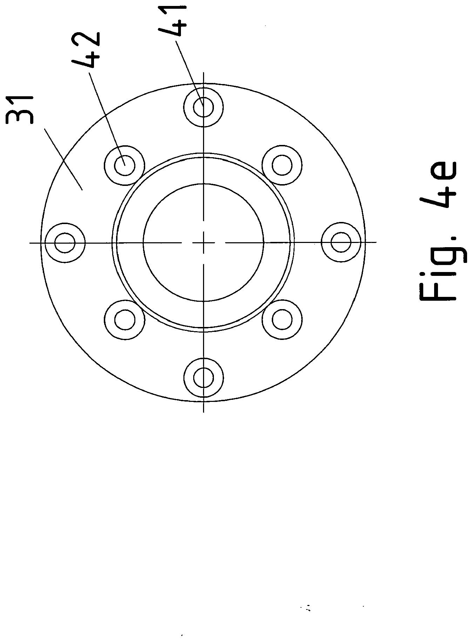

In den Figuren 4a bis 4c wird das Gehäuseteil 4 genauer gezeigt. In der Figur 4d wird die Ausführung der Dichtung 43 und in der Figur 4e die Ausführung des Deckels 31 näher gezeigt.

Der Deckel 31 weist Bohrlöcher auf einem Lochkreis 41 mit erstem Durchmesser und auf einem Lochkreis 42 mit zweitem Durchmesser, der kleiner ist als der erste Durchmesser.

Im Gehäuseteil 4 ist an dessen dem Deckel zugewandten axialen Endbereich ein Kühlkanal 33 vorgesehen, der in Umfangsrichtung verläuft, wobei am Anfang des Kühlkanals eine Eintrittsöffnung 34 und am Ende des Kühlkanals eine Austrittsöffnung 34 für ein Kühlmedium vorgesehen ist. Anfang und Ende sind durch einen Trennsteg 35 voneinander getrennt.

Das Gehäuseteil 4 weist ebenfalls Bohrlöcher auf einem Lochkreis 41 mit dem ersten Durchmesser und auf dem Lochkreis 42 mit dem zweiten Durchmesser auf.

Die radial außen liegende Oberfläche des Kühlkanals 33 weist einen in Umfangsrichtung schwankenden Radiusverlauf auf, da Verdickungen im Bereich der Bohrlöcher des Lochkreises 41 vorgesehen sind. Ebenso weist die radial innen liegende Oberfläche des Kühlkanals 33 einen in Umfangsrichtung schwankenden Radiusverlauf auf, da Verdickungen im Bereich der Bohrlöcher des Lochkreises 42 vorgesehen sind. Dabei sind die beiden schwankenden Verläufe mit Winkelversatz ausgeführt, also die Bohrlöcher des ersten und zweiten Lochkreises (41, 42) in Umfangsrichtung jeweils voneinander beabstandet.

Auf diese Weise ist der Kühlkanal in Umfangsrichtung mäanderförmig ausgeführt.

Zwischen Gehäuseteil 4 und Deckel 31 ist eine vorzugsweise elastische Dichtung 43 eingelegt. Diese ist aus einem äußeren und einem inneren Ring zusammengesetzt, die über jeweils im Bereich der Bohrlöcher liegende, im Wesentlichen radial verlaufende Stege verbunden sind. Die Dichtung ist vorzugsweise einstückig aus einem gummiartigen Stoff oder aus Kunststoff ausgeführt.

Der innere Ring und der äußere Ring der Dichtung 43 ist im Bereich des ersten und zweiten Lochkreises (41,42) mittels des flach ausgeführten Deckels 31 auf entsprechende ringförmige, axial zur Dichtung 43 herausstehenden Wulste gedrückt, in welche die Bohrlöcher eingebracht sind zur Befestigung des Deckels 31 am Gehäuseteil 4.

Vorteiligerweise wird durch die Dichtung 31 keine totale axiale Wärmesperre realisiert sondern die Wärme des Elektromotors dringt im Wesentlichen ungehindert über den Deckel 31 ins Kühlmedium. Außerdem wird die Wärme des Spindeltriebes über das Gehäuseteil 4 ins Kühlmedium geführt. Trotzdem ist mittels der Dichtung 31 der Austritt von Kühlmedium in den Elektromotor oder in die Umgebung verhindert,

Weiter vorteilig ist auch die mittige Anordnung der Kühlvorrichtung zwischen die beiden wärmeerzeugenden Komponenten des Antriebs, also des Elektromotors und des Spindeltriebs.

Die Eintritts- und Austrittsöffnung 34 für das Kühlmedium führen aus ungefähr radialer Richtung in den Kühlkanal. Die Fließrichtung des Kühlmediums ist in der Figur mit Pfeilen angedeutet.

Mittels des mäanderförmigen Verlaufs in Umfangrichtung des Kühlkanals wird der Wärmeübergangswiderstand in das Kühlmedium weiter verringert und somit die Entwärmung verbessert.

Deckel 31 und Gehäuseteil 4 weisen eine nitrierte Stahloberfläche auf, wodurch die Korrosionsbeständigkeit verbessert ist. Auch ionisiertes Wasser, Säuren oder Alkalische Lösungen sind somit als Kühlmedium verwendbar.

### Bezugszeichenliste

1 Motorgehäuse
2 Rotorwelle
3 Stator
4 Gehäuseteil
5 Gewindespindel
6 Spindelmutter
7 Gehäuseteil
8 Abstützung
9 Führungsring
10 Dichtring
11 Abstreifer
12 Kugel
13 Hülse
14 Kolbenstange
15 Gehäuseteil
16 Schulter zur Axialkraftaufnahme
17 Einführschräge
18 Lager
19 Dichtung, Wellendichtring
20 Klauenteil
21 Kunststoffstern
22 Klauenteil
23 Schmierstoffbohrung
24 Federelement
25 Spindelmutter
26 Führungsteil
30 Radialbohrung
31 Deckel
33 Kühlkanal
34 Eintritts- und Austrittsöffnung für Kühlmedium
35 Trennsteg
41 Lochkreis erstem Durchmesser
42Lochkreis mit zweitem Durchmesser
43 Dichtung

## Patentansprüche

1. Spindelmotor,
umfassend einen Elektromotor mit einem Rotor, der mit einer Gewindespindel (5) verbunden ist, deren Gewinde mit einem Gewinde einer mit einer Kolbenstange verbundenen Spindelmutter (6) im Eingriff steht,
wobei die Spindelmutter (6) mit Kolbenstange (14) axial geführt ist in einem ersten Gehäuseteil (7),
wobei zur axialen Führung ein Führungsteil mit der Spindelmutter (6) und der Kolbenstange (14) verbunden ist,
wobei die Gewindespindel (5) in einem zweiten, mit dem ersten Gehäuseteil verbundenen Gehäuseteil (4) über Lager (18) gelagert ist,
wobei das zweite Gehäuseteil (4) axial zwischen Elektromotor und dem der Spindelmutter (6), also dem ersten Gehäuseteil (7), angeordnet ist,
**dadurch gekennzeichnet, dass**
im zweiten Gehäuseteil (4) ein in Umfangsrichtung verlaufender Kühlkanal (33) ausgebildet ist,
wobei im zweiten Gehäuseteil (4) eine Eintritts- und eine Austrittsöffnung zum Kühlkanal (33) vorgesehen ist,
wobei die Eintritts- und Austrittsöffnung (34) aus ungefähr radialer Richtung in den Kühlkanal (33) führen,
wobei der Kühlkanal (33) in Umfangsrichtung mäanderförmig verläuft.

2. Spindelmotor nach Anspruch 1,
**dadurch gekennzeichnet, dass**
die Kolbenstange (14) an ihrer zur Umgebung hin vorgesehenen Oberfläche glatt ausgeführt ist.

## Claims

1. Spindle motor,
comprising an electric motor having a rotor which is connected to a threaded spindle (5), the thread of which is in engagement with a thread of a spindle nut (6) connected to a piston rod,
wherein the spindle nut (6) with piston rod (14) is axially guided in a first housing part (7),
wherein for axial guidance a guide part is connected to the spindle nut (6) and the piston rod (14),
wherein the threaded spindle (5) is mounted via bearing (18) in a second housing part (4) connected to the first housing part,
wherein the second housing part (4) is arranged axially between the electric motor and the spindle nut (6), i.e. the first housing part (7),
**characterised in that**
in the second housing part (4) a cooling channel (33) running in circumferential direction is formed,
wherein in the second housing part (4) an inlet opening and an outlet opening to the cooling channel (33) is provided, wherein the inlet opening and outlet opening (34) lead from approximately radial direction into the cooling channel (33),
wherein the cooling channel (33) runs in meandering fashion in circumferential direction.

2. Spindle motor according to Claim 1,
**characterised in that**
the piston rod (14) is designed smooth at its surface provided towards the surroundings.

## Revendications

1. Moteur à broche
comprenant un moteur électrique muni d'un rotor relié à une broche filetée (5) dont le filetage est en prise avec un filetage d'un écrou (6) de broche relié à une tige de piston, ledit écrou (6) de broche étant guidé axialement, avec ladite tige de piston (14), dans une première partie de carter (7),
une partie de guidage étant reliée audit écrou (6) de broche et à ladite tige de piston (14), en vue du guidage axial,
ladite broche filetée (5) étant montée, par l'intermédiaire de paliers (18), dans une seconde partie de carter (4) reliée à ladite première partie de carter,
ladite seconde partie de carter (4) étant interposée axialement entre ledit moteur électrique et la partie affectée audit écrou (6) de broche, c'est-à-dire ladite première partie de carter (7),
**caractérisé par le fait**
**qu'**un canal de refroidissement (33), s'étendant dans le sens périphérique, est pratiqué dans la seconde partie de carter (4),
un orifice d'entrée et un orifice de sortie, gagnant ledit canal de refroidissement (33), étant prévus dans ladite seconde partie de carter (4),
lesdits orifices d'entrée et de sortie (34) débouchant dans ledit canal de refroidissement (33) à partir d'une direction approximativement radiale,
ledit canal de refroidissement (33) s'étendant en forme de méandres dans la direction périphérique.

2. Moteur à broche selon la revendication 1,
**caractérisé par le fait que**
la tige de piston (14) est de réalisation lisse sur sa surface prévue pour pointer vers l'espace environnant.
